# EUROPEAN PATENT APPLICATION

(11) **EP 4 827 197 A1**
(43) Date of publication of application: **21.10.2026**
(21) Application number: 24903539.5
(22) Date of filing: 02.12.2024
(51) Int. Cl.: H04W 72/0446, H04W 72/25, H04W 84/12

(54) **COMMUNICATION DEVICE, COMMUNICATION METHOD, AND PROGRAM**

(30) Priority: 13.12.2023 JP 2023210284
(71) Applicant: Canon Kabushiki Kaisha, Tokyo 146-8501 (JP)
(72) Inventor: YOSHIKAWA Yuki, Tokyo 146-8501 (JP)
(74) Representative: Canon Europe Limited
(86) International application number: PCT/JP2024/042513
(87) International publication number: WO 2025/126881

(57) **Abstract**

A communication apparatus functioning as an access point complying with an IEEE 802.11 series standard receives, from a first other communication apparatus connected to the communication apparatus, a first frame including first information concerning a period during which communication is scheduled to be executed between the first other communication apparatus and a second other communication apparatus without intervention of the communication apparatus, and transmits, based on the first information, a second frame including second information capable of specifying a recommended period that is recommended to be used for communication between the first other communication apparatus and the second other communication apparatus without intervention of the communication apparatus

## Description

### TECHNICAL FIELD

The present invention relates to a technique of effectively using radio resources.

### BACKGROUND ART

A wireless LAN (Local Area Network) complying with the IEEE (Institute of Electrical and Electronics Engineers) 802.11 series standard is widely used. The IEEE 802.11 series standard includes IEEE 802.11a/b/g/n/ac/ax/be standards (PTL 1). To further improve the reliability of communication, an IEEE 802.11bn standard has been defined as a new standard. In this standardization process, introduction of a function of executing has been studied, while an access point (AP) and a station (STA) are connected in an infrastructure mode, P2P communication in which the STA operates as an AP and is directly connected to a different STA. Note that P2P represents Peer-to-Peer.

### CITATION LIST

### PATENT LITERATURE

PTL 1: Japanese Patent Laid-Open No. 2018-050133

### SUMMARY OF INVENTION

### TECHNICAL PROBLEM

In a case where an STA communicable with an AP executes P2P communication with another STA, the STA can receive a signal from the AP and a signal from the other STA as a communication partner. Therefore, it is important to efficiently execute these communications while preventing the signals from interfering with each other in the STA.

### SOLUTION TO PROBLEM

The prevent invention provides a technique of efficiently executing inter-terminal communication and other communication while suppressing interference between these communications.

A communication apparatus according to one aspect of the present invention is a communication apparatus functioning as an access point complying with an IEEE 802.11 series standard, comprising reception means for receiving, from a first other communication apparatus connected to the communication apparatus, a first frame including first information concerning a period during which communication is scheduled to be executed between the first other communication apparatus and a second other communication apparatus without intervention of the communication apparatus, and transmission means for transmitting, based on the first information, a second frame including second information capable of specifying a recommended period that is recommended to be used for communication between the first other communication apparatus and the second other communication apparatus without intervention of the communication apparatus.

### ADVANTAGEOUS EFFECTS OF INVENTION

According to the present invention, it is possible to efficiently execute inter-terminal communication and other communication while suppressing interference between these communications.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a network;
Fig. 2 is a block diagram showing an example of the hardware configuration of a communication apparatus (AP and STA);
Fig. 3 is a block diagram showing an example of the functional configuration of the communication apparatus (AP and STA);
Fig. 4 is a flowchart illustrating an example of the procedure of processing executed by the AP;
Fig. 5 is a flowchart illustrating an example of the procedure of processing executed by the STA;
Fig. 6 is a sequence chart showing an example of the procedure of communication for a notification of a P2P recommended period;
Fig. 7 is a view showing an example of the structure of an element indicating the P2P recommended period;
Fig. 8 is a view showing another example of the structure of the element indicating the P2P recommended period;
Fig. 9A is a view showing an example of the structure of an ADDTS Request frame;
Fig. 9B is a view showing the example of the structure of the ADDTS Request frame;
Fig. 9C is a view showing the example of the structure of the ADDTS Request frame;
Fig. 10 is a view showing an example of the structure of an ADDTS Response frame;
Fig. 11 is a view showing an example of the structure of an SCS Request frame;
Fig. 12A is a view showing the example of the structure of the SCS Request frame;
Fig. 12B is a view showing the example of the structure of the SCS Request frame;
Fig. 13 is a view showing an example of the structure of an SCS Response frame; and
Fig. 14 is a sequence chart showing an example of the procedure of communication when collecting information of P2P communication.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (Network Configuration)

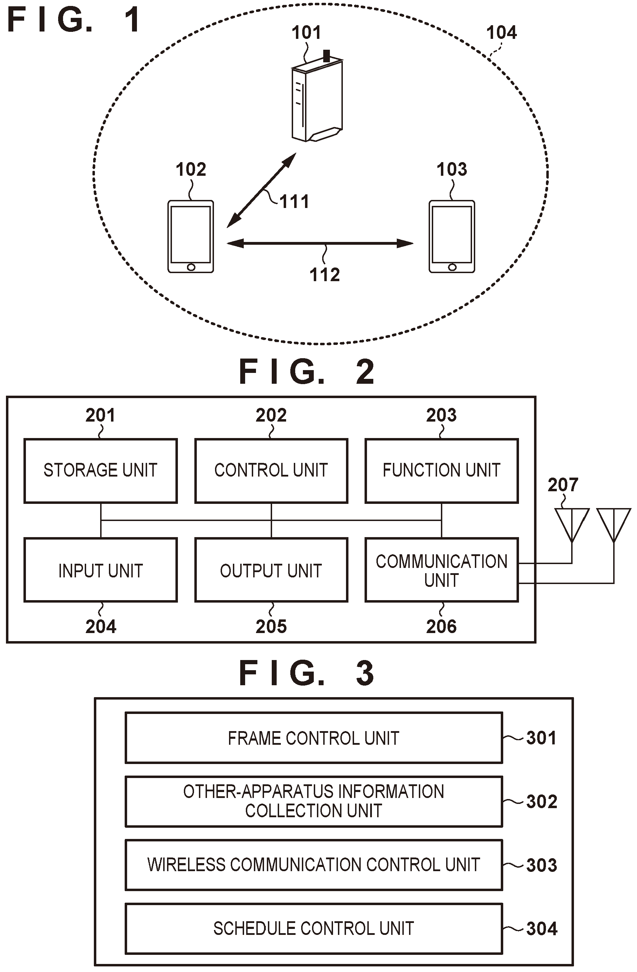

Fig. 1 shows an example of the configuration of a network according to an embodiment. This network is a wireless LAN (Local Area Network) in which wireless communication between communication apparatuses formed to comply with the IEEE 802.11 series standard is executed. Note that IEEE is an abbreviation for Institute of Electrical and Electronics Engineers. Fig. 1 shows a state in which an AP 101 constructs a network 104 and an STA 102 joins the network 104. Note that throughout this embodiment, "AP" indicates an access point operating in compliance with the IEEE 802.11 series standard and "STA" indicates a station operating in compliance with the IEEE 802.11 series standard. Note that an STA 103 is located within a range in which it can receive a signal from the AP 101 but does not join the network 104. That is, the AP 101 is connected to the STA 102 but is not connected to the STA 103.

In this embodiment, the STA 102 operates as an STA and can also operate as an AP. Then, for example, the STA 102 can be connected to the STA 103 and execute communication using the function as the AP. Note that the STA 102 can establish connection to the STA 103 and execute communication without operating as the AP. That is, communication between the STAs can be executed while both the STA 102 and the STA 103 operate as STAs. Alternatively, the STA 102 may establish connection to the STA 103 functioning as the AP and execute communication. In this way, communication between the STAs can be executed in various forms. Note that in this embodiment, direct communication between the STAs will be referred to as P2P (Peer-to-Peer) communication hereinafter regardless of the form.

Assume that the AP 101, the STA 102, and the STA 103 can execute wireless communication complying with the IEEE 802.11bn standard as a successor standard of the IEEE 802.11be standard. Note that the IEEE 802.11bn standard is sometimes called the IEEE 802.11UHR standard. UHR is an abbreviation for Ultra High Reliability. The AP 101, the STA 102, and the STA 103 will sometimes collectively be referred to as "communication apparatuses" hereinafter if it is unnecessary to particularly distinguish them. The communication apparatus can execute communication using frequency bands such as the 2.4-GHz band, 3.6-GHz band, 5-GHz band, 6-GHz band, and the 45-GHz band and 60-GHz band called the millimeter wave bands. Note that the frequency bands used are not limited to these and, for example, frequency bands other than the above ones, such as the Sub-1 GHz band, may be used. The AP 101 and the STA 102 can communicate with each other using frequency bandwidths of 20 GHz, 40 MHz, 80 MHz, 160 MHz, 320 MHz, 540 MHz, 640 MHz, 1080 MHz, and 2160 MHz. Note that the frequency bandwidths used are not limited to these and, for example, a frequency bandwidth that is a multiple of 20 MHz, such as 60 MHz or 240 MHz, may be used, or a frequency bandwidth that is not a multiple of 20 MHz, such as 4 MHz or 24 MHz, may be used. Note that in the IEEE 802.11 series standard, each of the bandwidths of frequency channels in the 2.4-, 5-, and 6-GHz bands is defined as 20 MHz. In addition, the bandwidth of a frequency channel in the 45-GHz band is defined as 540 MHz, and the bandwidth of a frequency channel in the 60-GHz band is defined as 1080 MHz or 2160 MHz. The frequency channel is that defined in the IEEE 802.11 series standard, and a plurality of frequency channels are defined in each of the 2.4-, 5-, 6-, 45-, and 60-GHz frequency bands. Note that a bandwidth of 40 MHz or more can be used in one frequency channel by bonding frequency channels adjacent to each other.

Note that the communication apparatus may support legacy standards as standards before the IEEE 802.11bn standard in addition to the IEEE 802.11bn standard. That is, the communication apparatus (AP 101, STA 102, and STA 103) can be configured to execute an operation complying with at least one the IEEE 802.11a/b/g/n/ac/ax/be standards in addition to an operation complying with the IEEE 802.11bn standard. Furthermore, the communication apparatus may be configured to execute communication complying with another communication standard such as Bluetooth^{®}, NFC, UWB, ZigBee, or MBOA in addition to the IEEE 802.11 series standard. Note that UWB is an abbreviation for Ultra Wide Band, and MBOA is an abbreviation for Multi Band OFDM Alliance. OFDM is an abbreviation for Orthogonal Frequency Division Multiplexing. Furthermore, NFC is an abbreviation for Near Field Communication. UWB includes wireless USB, wireless 1394, and WiNET. The communication apparatus may support communication standards of wired communication such as a wired LAN. The AP 101 can be, for example, a wireless LAN router, a personal computer (PC), or the like, but is not limited to these. The AP 101 may be an information processing apparatus such as a radio chip that can execute wireless communication complying with the IEEE 802.11bn standard. Furthermore, the STA 102 or the STA 103 can be, for example, a camera, a tablet, a smartphone, a PC, a mobile phone, a video camera, or a headset, but is not limited to them. The STA 102 or the STA 103 may be an information processing apparatus such as a radio chip that can execute wireless communication complying with the IEEE 802.11bn standard.

In this embodiment, while establishing infrastructure connection to the AP 101 and executing communication, as described above, the STA 102 also establishes connection to the STA 103 and executes P2P communication. At this time, it is important for the STA 102 to efficiently perform communication by infrastructure connection and P2P communication in parallel. To do this, the AP 101 according to this embodiment collects requests concerning P2P communication such as a period during which P2P communication is scheduled to be executed and a data amount from the connected STA 102, and sets a usable channel and a period for P2P communication in accordance with the requests. Then, the AP 101 notifies the STA 102 of the set channel and period as a combination of a recommended channel and a recommended period. The STA 102 controls execution of P2P communication based on the notified combination of the recommended channel and the recommended period. For example, the AP 101 sets, as the recommended channel and the recommended period for P2P communication, a combination of a channel and a period unused for communication with the currently connected STA. This can prevent P2P communication by the STA 102 and communication of the AP 101 from being executed in the same channel for the same period. Furthermore, for example, by setting the recommended period for P2P communication in accordance with the P2P communication request by the STA, it is possible to prevent the length of the recommended period from being unnecessarily long and execute communication other than P2P communication, thereby improving communication efficiency.

### (Configuration of Communication Apparatus)

Fig. 2 shows an example of the hardware configuration of the communication apparatus (AP 101, STA 102, and STA 103) according to this embodiment. The communication apparatus includes, as its hardware configuration, a storage unit 201, a control unit 202, a function unit 203, an input unit 204, an output unit 205, a communication unit 206, and an antenna 207.

The storage unit 201 includes, for example, one or more memories such as a ROM and a RAM, and stores computer programs for performing various operations to be described later, and various kinds of information such as communication parameters for wireless communication. Note that ROM is an abbreviation for Read Only Memory, and RAM is an abbreviation for Random Access Memory. Note that in addition to or instead of the memories such as a ROM and a RAM, the storage unit 201 may include a storage medium such as a flexible disk, a hard disk, an optical disk, a magnetooptical disk, a CD-ROM, a CD-R, a magnetic tape, a nonvolatile memory card, or a DVD. The storage unit 201 may include a plurality of memories.

The control unit 202 includes, for example, one or more processors such as a CPU and an MPU, and controls the whole communication apparatus by executing the computer programs stored in the storage unit 201. Note that CPU is an abbreviation for Central Processing Unit and MPU is an abbreviation for Micro Processing Unit. The control unit 202 can be configured to control the whole communication apparatus, and also execute processing of generating data and signals (radio frames) to be transmitted in communication with another communication apparatus. Note that the control unit 202 may be configured to execute processing of controlling the whole communication apparatus and the like by cooperation of the computer programs stored in the storage unit 201 and an OS (Operating System). In addition, the control unit 202 may include a plurality of processors such as a multi-core processor, and execute processing of controlling the whole communication apparatus and the like by the plurality of processors. The control unit 202 may be formed by an ASIC (Application Specific Integrated Circuit), a DSP (Digital Signal Processor), an FPGA (Field Programmable Gate Array), or the like.

In addition, the control unit 202 controls the function unit 203 to execute predetermined processing such as wireless communication, image capturing, printing, or projection. The function unit 203 is, for example, hardware used by the communication apparatus to execute predetermined processing. For example, if the communication apparatus is a camera, the function unit 203 is an image capturing unit and performs image capturing processing. For example, if the communication apparatus is a printer, the function unit 203 is a print unit and performs print processing. For example, if the communication apparatus is a projector, the function unit 203 is a projection unit and performs projection processing. Data processed by the function unit 203 may be data stored in the storage unit 201 or data communicated with another communication apparatus via the communication unit 206 to be described later.

The input unit 204 accepts various kinds of operations from the user. The output unit 205 performs various kinds of outputs to the user. Here, the output by the output unit 205 includes, for example, at least one of display on a screen, audio output by a loudspeaker, and vibration output. Note that both the input unit 204 and the output unit 205 may be implemented by one module, like a touch panel. Furthermore, each of the input unit 204 and the output unit 205 may be incorporated in the communication apparatus, or may be configured as an external apparatus connected to the communication apparatus.

The communication unit 206 controls wireless communication complying with the IEEE 802.11 series standard or controls IP communication. In this embodiment, the communication unit 206 is configured to particularly control wireless communication complying with the IEEE 802.11bn standard. Note that in addition to the IEEE 802.11bn standard, the communication unit 206 may control wireless communication complying with another IEEE 802.11 series standard or control wired communication by a wired LAN or the like. The communication unit 206 controls the antenna 207 to, for example, transmit/receive signals for wireless communication generated by the control unit 202. The communication apparatus may include a plurality of communication units 206. Note that if the communication apparatus supports the NFC standard or Bluetooth^{®} standard in addition to the IEEE 802.11bn standard, it may control wireless communication complying with these communication standards. If the communication apparatus can execute wireless communication complying with a plurality of communication standards, it may include a communication unit and an antenna supporting each communication standard. The communication apparatus communicates data such as image data, document data, or video data with another communication apparatus via the communication unit 206. Note that the antenna 207 may be prepared separately from the communication unit 206 or may be formed as one module combined with the communication unit 206.

The antenna 207 is an antenna configured to allow communication in various frequency bands such as sub-GHz band, the 2.4-GHz band, the 5-GHz band, the 6-GHz band, the 45-GHz band, and the 60-GHz band. Note that the communication apparatus may include, as the antenna 207, one antenna such as a multiband antenna or a plurality of antennas respectively corresponding to, for example, the plurality of frequency bands. Alternatively, the communication apparatus may include a plurality of multiband antennas respectively corresponding to the plurality of frequency bands. If the communication apparatus includes a plurality of antennas, it may include one communication unit 206 for the plurality of antennas or a plurality of communication units 206 respectively corresponding to the plurality of antennas. Note that the antenna 207 may be a single antenna or an antenna array. That is, the antenna 207 may include a plurality of antenna elements, and may be configured to execute, for example, MIMO (Multi-Input and Multi-Output) communication.

Fig. 3 shows an example of the functional configuration of the communication apparatus (AP 101, STA 102, and STA 103) according to this embodiment. The communication apparatus includes, for example, a frame control unit 301, an other-apparatus information collection unit 302, a wireless communication control unit 303, and a schedule control unit 304. Note that these are merely examples, and some or all of the function units may be replaced by other components, a plurality of function units may be integrated to form one function unit, and one function unit may be divided into a plurality of function units. A plurality of identical function units may be prepared.

The frame control unit 301 generates a radio frame to be transmitted to a partner apparatus. For example, the frame control unit 301 of the AP 101 generates a radio frame destined for the STA 102, and the frame control unit 301 of the STA 102 generates a radio frame destined for the AP 101 or the STA 103. The frame control unit 301 packages transmission target data as a frame to be included in a PPDU, and outputs it. Note that PPDU is an abbreviation for Physical layer Protocol Data Unit. The other-apparatus information collection unit 302 executes processing of collecting information concerning a time period in which the STA is to execute P2P communication (the STA is scheduled to execute P2P communication). The other-apparatus information collection unit 302 of the AP 101 collects information of the time period in which P2P communication is scheduled to be executed in a surrounding STA. The other-apparatus information collection unit 302 of the STA notifies the AP 101 of information of the time period in which the self-apparatus is scheduled to execute P2P communication. Alternatively, the other-apparatus information collection unit 302 of the STA may collect information of a time period in which another surrounding STA is scheduled to execute P2P communication. In this case, the other-apparatus information collection unit 302 may notify the AP 101 of the collected information concerning the other AP. The wireless communication control unit 303 executes control to perform wireless communication with the partner apparatus. The wireless communication control unit 303 executes control to transmit the radio frame generated by the frame control unit 301 and receive the radio frame transmitted from the partner apparatus to the self-apparatus. The schedule control unit 304 performs schedule control based on the information of the time period in which P2P communication is scheduled to be executed, which has been acquired by the other-apparatus information collection unit 302. For example, the schedule control unit 304 of the AP 101 calculates the time usable for P2P communication, and notify the STA 102 and the STA 103 of it, thereby performing schedule control. Each of the schedule control units 304 of the STA 102 and the STA 103 can execute wireless communication in accordance with the schedule decided by the AP 101 based on the information of the period during which P2P communication is scheduled to be executed, which has been sent by the other-apparatus information collection unit 302.

### (Procedure of Processing)

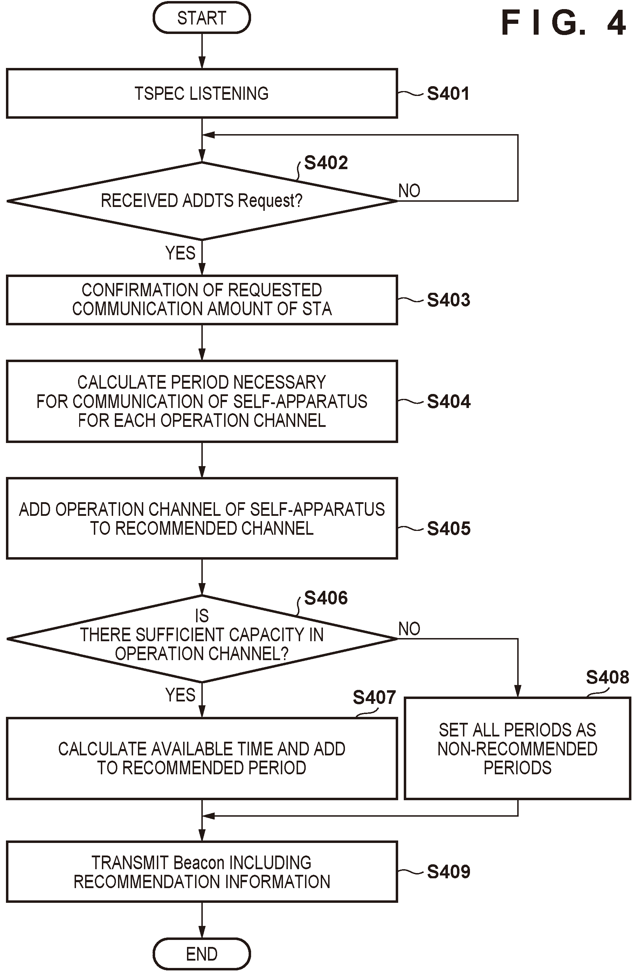

Subsequently, processing executed by the AP 101 will be described. Fig. 4 shows an example of the procedure of processing executed by the AP 101. This processing is performed when the control unit 202 of the AP 101 executes the program stored in the storage unit 201 of the AP 101. In this processing, the AP 101 collects information concerning a period in which the STA is to execute P2P communication, and decides a recommended time to be used for P2P communication. Then, the AP 101 notifies the STA 102 and the STA 103 of information concerning the recommended time by broadcasting the recommended time to be used for P2P communication. This processing can be started when, for example, the AP 101 is connected to one of the STAs (for example, the STA 102). Note that this embodiment will describe an example in which only the STA 102 is connected to the AP 101, but a plurality of STAs may be connected to the AP 101 in parallel. In this case, every time each STA is connected, the AP 101 can execute the processing shown in Fig. 4. Note that the processing shown in Fig. 4 is merely an example and, for example, the order of the processing steps may be changed without departing from the spirit and scope of the present invention. A plurality of processing steps may be integrated into one processing step, and one processing step may be divided into a plurality of processing steps.

First, the AP 101 listens to acquire information indicating whether the currently connected STA 102 is scheduled to execute P2P communication and indicating, if the STA 102 is scheduled to execute P2P communication, the time when P2P communication is scheduled to be executed (step S401). For example, the AP 101 stands by for an ADDTS (ADD Traffic Stream) Request frame from the STA 102 (step S402). This frame is used when, for example, a parameter such as communication quality required by the STA 102 is indicated and the AP 101 is requested to execute communication using the parameter. In this embodiment, the ADDTS Request frame stores a TSPEC (Traffic SPECification) field including information indicating a parameter such as a time period in which P2P communication is executed. The AP 101 collects information concerning a P2P communication schedule (request) in the STA 102 using the information of the TSPEC field. Note that this is merely an example, and information concerning the P2P communication schedule of the STA may be collected using another radio frame or another field in the ADDTS Request frame. Upon receiving the ADDTS Request frame from the STA 102 (YES in step S402), the AP 101 confirms the information included in the frame to acquire the information of a communication parameter for requesting to execute P2P communication by the STA 102. In this example, for example, the AP 101 acquires information of a data amount (communication amount) requested to be communicated by the STA 102 (step S403). Note that at this time, the AP 101 may acquire not only the communication amount information but also TID (Traffic Identifier) information and communication period information.

On the other hand, the AP 101 calculates a period necessary for the self-apparatus to execute communication for each of one or more channels in which the self-apparatus operates (step S404). The AP 101 sets, as a recommended channel related to P2P communication, each of the one or more channels in which the self-apparatus operates (step S405). Then, the AP 101 confirms whether there is sufficient capacity for other communication to use any of the operation channels (recommended channels) in the period during which the self-apparatus operates (step S406). That is, the AP 101 determines whether it is possible to set a period during which any of the operation channels is not used in the period during which the self-apparatus operates. If it is determined that there is sufficient capacity in any of the recommended channels can be used (YES is step S406), the AP 101 calculates the length of an available time during which the channel is not used for communication of the self-apparatus. Then, the AP 101 sets, as a recommended period of P2P communication, a period of the length during which communication of the self-apparatus is not executed (step S407). The recommended period is associated with the recommended channel that has been determined to be usable in step S406. Note that the AP 101 may determine whether the recommended period can be set at the timing when the STA is scheduled to execute P2P communication. If the recommended period cannot be set for any of the recommended channels at the timing requested by the STA, the AP 101 may determine that it is impossible to set the period for executing P2P communication. On the other hand, if it is determined that it is impossible to set the period (there is no sufficient capacity) for executing P2P communication with respect to all the channels in which the self-apparatus operates (NO in step S406), the AP 101 sets all the periods of all the recommended channels as non-recommended periods during which P2P communication is not recommended (step S408). Then, the AP 101 adds recommendation information such as the recommended channel and the recommended period to, for example, a Media Access Control (MAC) frame of a Beacon frame, and broadcasts the frame (step S409). For example, the recommendation information such as the recommended channel and the recommended period can be stored in an information element such as a Recommended element in the MAC frame. This recommendation information may be associated with, for example, specific STAs. That is, the recommended period for P2P communication between specific STAs or the like may be set. Note that the recommendation information can be information in an arbitrary format capable of specifying the recommended channel and the recommended period. That is, the recommendation information may be information for directly designating the recommended channel and the recommended period, or information for indirectly designating these pieces of information.

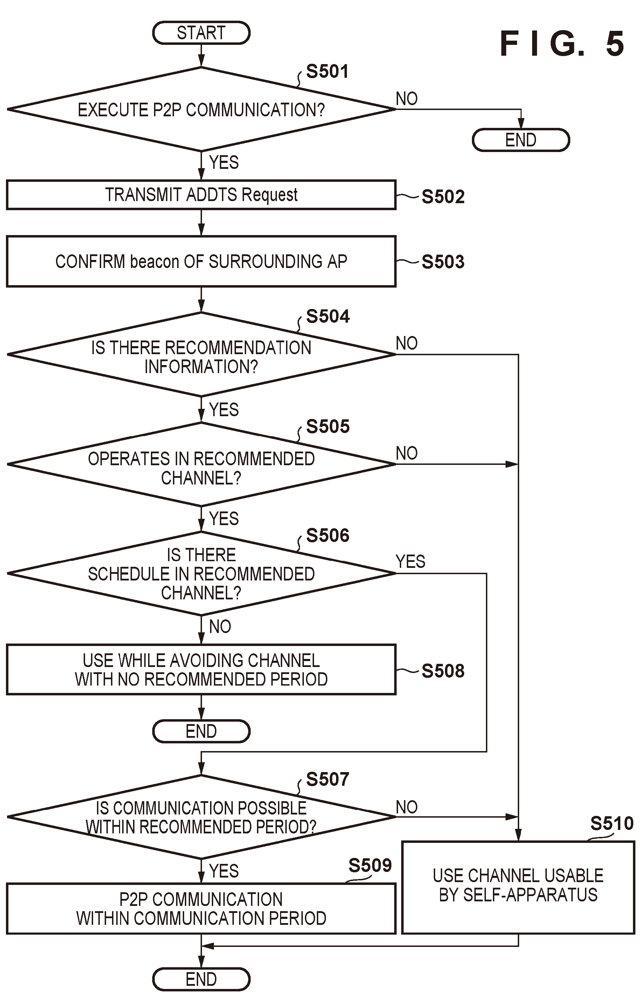

Subsequently, processing executed by the STA 102 will be described. Fig. 5 shows an example of the procedure of processing executed by the STA 102. This processing is performed when, for example, the control unit 202 of the STA 102 executes the program stored in the storage unit 201 of the STA 102. In this processing, the STA 102 notifies the AP of information concerning a period during which P2P communication is to be executed, acquires the recommended period of P2P communication decided based on the information and broadcast, and controls execution of P2P communication based on the information. This processing can be started, for example, when the power of the STA 102 or the wireless function of the STA 102 is turned on or when the STA 102 accepts an instruction to start the operation as the STA. Note that the processing shown in Fig. 5 is merely an example and, for example, the order of processing steps may be changed without departing from the spirit and scope of the present invention. A plurality of processing steps may be integrated into one processing step, and one processing step may be divided into a plurality of processing steps.

If it is determined to execute P2P communication with another STA existing on the periphery (YES in step S501), the AP 102 executes the following processing. Note that if it is determined not to execute P2P communication with another STA (NO in step S501), the STA 102 ends the processing shown in Fig. 5 without executing the following processing. If it is determined to execute P2P communication (YES in step S501), the STA 102 transmits, to the connected AP 101, an ADDTS Request frame including request information (TSPEC) such as a period during which P2P communication is scheduled to be executed (step S502). Note that in response to reception of a predetermined notification from the AP 101, the STA 102 may transmit an ADDTS Request frame including request information concerning P2P communication.

After that, the STA 102 receives a Beacon frame sent from a surrounding AP (including, for example, the AP 101), and confirms the contents (step S503). Note that the Beacon frame transmitted from the AP 101 can include the recommendation information such as the recommended channel and the recommended period for P2P communication, which has been decided based on the request information included in the ADDTS Request frame transmitted in step S502. The STA 102 determines whether the Beacon frame from the surrounding AP includes the recommendation information (for example, a Recommended element) of P2P communication (step S504). If the Beacon frame includes the P2P recommendation information (YES in step S504), the STA 102 determines whether the self-apparatus operates in the recommended channel indicated by the recommendation information (step S505). If, for example, there is no available channel other than the recommended channel, the STA 102 can determine to operate in the recommended channel. Furthermore, in consideration of the use status of the recommended channel around the self-apparatus, the STA 102 can determine whether the self-apparatus operates in the recommended channel. If the recommended channel usable by the self-apparatus is hardly used by the surrounding AP and STA, and the probability that it is possible to access the recommended channel is sufficiently high, the STA 102 can determine to operate in the recommended channel. If, for example, the use ratio (the ratio of the time during which any communication apparatus uses the recommended channel to an observation time) of any of the recommended channels does not exceed a predetermined value, the STA 102 can determine to operate in the recommended channel. Furthermore, if none of the recommended channels are usable (for example, the use ratios of them exceed the predetermined value), the STA 102 can determine not to operate in the recommended channels.

If the STA 102 determines to operate in the recommended channel (YES in step S505), the STA 102 determines whether there is a schedule in which P2P communication of the self-apparatus is possible in any of the operable recommended channels (step S506). For example, the STA 102 confirms the Recommended element of the Beacon frame, and determines, if the recommended period for P2P communication of the self-apparatus is set, that there is such a schedule. Alternatively, for example, if the recommended period for P2P communication of another STA as a communication partner or the recommended period for P2P communication for which no subject that executes communication is designated is set, the STA 102 may determine that there is such a schedule. Note that if the Beacon frame does not include the recommended period for P2P communication for which the self-apparatus (or the partner apparatus) is designated, the STA 102 may determine that there is no such schedule. That is, the STA 102 can determine whether there is the recommended period for which the self-apparatus is designated. Then, if it is determined that the recommended period during which P2P communication of the self-apparatus can be executed is designated in the Beacon frame (YES in step S506), the STA 102 determines whether it is possible to execute P2P communication within this period (step S507). For example, if the STA 102 can complete requested communication within the period, the STA 102 can determine that it is possible to execute P2P communication within the period. Note that this is merely an example, and the STA 102 may determine, using another criterion, whether it is possible to execute P2P communication within the period. If it is determined that it is possible to execute P2P communication within the recommended period (YES in step S507), the STA 102 executes P2P communication during the period (step S509). On the other hand, if it is determined that it is impossible to execute P2P communication within the recommended period (NO in step S507), the STA 102 executes P2P communication using the channel usable by the self-apparatus regardless of the recommendation information (step S510).

If it is determined that the recommended period during which P2P communication of the self-apparatus can be executed is not designated in the Beacon frame (NO in step S506), the STA 102 executes P2P communication using the channel other than the channel in which no recommended period is set (step S508). For example, the STA 102 can execute P2P communication with the partner apparatus (STA 103) during the recommended period for P2P communication with another STA. Note that if there is no recommended period during which P2P communication of the self-apparatus can be executed, the STA 102 need not execute P2P communication. Furthermore, if the Beacon frame received from the surrounding AP includes no recommendation information (NO in step S504) or the STA 102 determines not to operate in the recommended channel (NO in step S505), the STA 102 executes P2P communication using the channel usable by the self-apparatus (step S510).

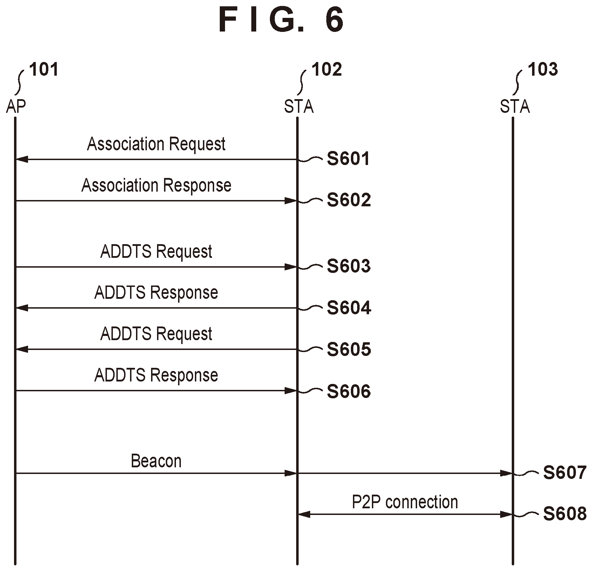

Subsequently, an example of the procedure of communication executed in this embodiment will be described with reference to Fig. 6. First, the STA 102 transmits a connection request (Association Request frame) to the AP 101 (S601). Then, the AP 101 transmits, to the STA 102, a connection response (Association Response frame) to the connection request (S602). This establishes connection between the AP 101 and the STA 102. After the establishment of the connection, the AP 101 transmits an ADDTS Request frame to the STA 102, thereby notifying the STA 102 of parameters such as a communication amount and a communication period requested by the self-apparatus (S603). Upon receiving the ADDTS Request frame, the STA 102 transmits an ADDTS Response frame to the AP 101, thereby notifying the AP 101 that the ADDTS Request frame has been received (S604). Note that the AP 101 may request, by the ADDTS Request frame, each STA to transmit a predetermined frame (for example, an ADDTS Request frame) including a request (TSPEC) concerning P2P communication. Note that transmission of a frame including a request concerning P2P communication may be requested by a frame of another format. The STA 102 transmits an ADDTS Request frame to the AP 101, thereby notifying the AP 101 of parameters such as a communication amount and a communication period requested by the self-apparatus with respect to P2P communication (S605). The AP 101 transmits an ADDTS Response frame to the STA 102, thereby notifying the STA 102 that the ADDTS Request frame has been received (S606).

The AP 101 broadcasts a Beacon frame including, as a Recommended element, recommendation information including a recommended channel and a recommended period based on information such as the communication amount and the communication period received from the STA 102 (S607). In this embodiment, the STA 102 and the STA 103 can receive this Beacon frame. Each of the STA 102 and the STA 103 extracts the recommendation information (for example, the Recommended element) including the recommended channel and the recommended period from the received Beacon frame, and determines, based on the recommendation information, whether it is possible to execute P2P communication of the self-apparatus. Then, if it is determined that it is possible to execute P2P communication of the self-apparatus, each of the STA 102 and the STA 103 executes P2P communication with the partner apparatus (S608).

### (Structure of Recommended Element in Beacon Frame)

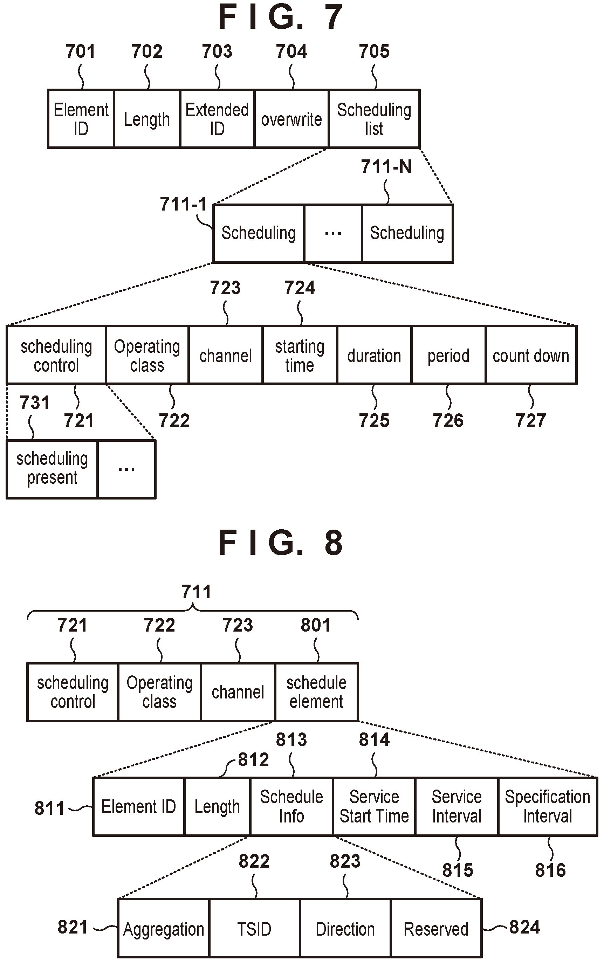

Fig. 7 shows an example of the structure of the Recommended element included in the Beacon frame broadcast from the AP 101. Upon receiving the Beacon frame, the STA executes communication based on this information. Similar to other information elements defined in the IEEE 802.11 standard, the Recommended element includes an Element ID field 701, a Length field 702, and an Extended ID field 703. These fields store pieces of basic information for identifying data of the information element. The Recommended element further includes an overwrite field 704 and a Scheduling List field 705 indicating the information of the recommended period for each recommended channel. The Scheduling List field 705 includes Scheduling subfields 711 corresponding to the number of recommended channels. Fig. 7 shows an example in a case where there are N recommended channels, and shows Scheduling subfields 711 from a Scheduling subfield 711-1 related to the first recommended channel to a Scheduling subfield 711-N related to the Nth recommended channel.

In the Scheduling subfield 711, a Scheduling control subfield 721 stores a value for performing schedule control. An Operting class subfield 722 stores a value indicating an Operting class. A channel subfield 723 stores information indicating the recommended channel corresponding to the Scheduling subfield 711 including this subfield. A starting time subfield 724 stores a value indicating the start time of the recommended period of the recommended channel, and a duration subfield 725 stores a value indicating the schedule period of the recommended period. A period subfield 725 stores a value indicating the end of the recommended period. Furthermore, a count down subfield 726 stores a value indicating the remaining number of communications. The STA can confirm the contents of the one or more Scheduling subfields 711, and specify the combination of the recommended channel and the recommended period. Note that for example, with respect to, among the operation channels of the AP, the channel in which the recommended period is not set (unavailable channel), the information indicating the recommended period in the Scheduling subfield 711 need not be included. Furthermore, the information indicating the recommended period in the Scheduling subfield 711 may explicitly indicate that there is no recommended period, and for example, the information may be set to an invalid value. The channel in which the recommended period cannot be prepared may be prevented from being notified as the recommended channel. That is, with respect to the channel which is the operation channel of the AP but in which the recommended period is not set, the Scheduling subfield 711 need not be prepared.

Note that the Scheduling control subfield 721 includes a scheduling present subfield 731. The scheduling present subfield 731 indicates whether there is an available time during which the AP 101 does not use the recommended channel. If there is an available time during which the AP 101 does not use the recommended channel, that is, there is a time during which the recommended channel can be used for P2P communication, subfields from the valid starting time subfield 724 are set. For example, if 1 is set in the scheduling present subfield 731, the subfields from the valid starting time subfield 724 are set. On the other hand, if 0 is set in the scheduling present subfield 731, the subfields from the valid starting time subfield 724 are not set. In this case, in an example, the subfields after the valid starting time subfield 724 can be omitted. Alternatively, invalid values may be set in the subfields from the valid starting time subfield 724. Note that in the above-described example, it is indicated that there is no available time usable for P2P communication in a case where 0 is set in the scheduling present subfield 731, but the present invention is not limited to this. That is, if 0 is set in the scheduling present subfield 731, the subfields from the valid starting time subfield 724 may be set. In this case, if 1 is set in the scheduling present subfield 731, it is indicated that the subfields from the valid starting time subfield 724 are not set. If such the scheduling present subfield 731 is used, for example, the STA 102 can confirm the value of the subfield, and determine whether there is the recommended period in the recommended channel. For example, if the value of the subfield indicates that the subfields from the starting time subfield 724 are absent, the STA 102 can determine that there is no recommended period. Alternatively, it may be determined in advance that if the subfields from the starting time subfield 724 are absent, the STA 102 interprets the whole period as the recommended period with respect to the recommended channel.

Note that the Recommended element may have a structure different from that shown in Fig. 7. For example, the Recommended element may have a structure shown in Fig. 8. Fig. 8 shows a structure obtained by adding a Scheduling element subfield 801 to the Scheduling subfield 711 in the structure shown in Fig. 7. On the other hand, in this structure, the subfields from the channel subfield 723 to the count down subfield 727 are omitted. The Scheduling element subfield 801 includes an Element ID subfield 811 and a Length subfield 812 indicating an identifier and a length related to the Scheduling element subfield 801, respectively. The Scheduling element subfield 801 further includes a Schedule info subfield 813, a Service Start time subfield 814, and a Service interval subfield 815. The Schedule info subfield 813 includes an Aggregation subfield 821, a TSID subfield 822, and a Direction subfield 823. Note that the TSID subfield 822 may be omitted, and may be set as a Reserve field to be used in a future standard. In this structure as well, the Recommended element can notify a surrounding STA of the information of the recommended channel and the recommended period.

### (Structures of ADDTS Request Frame and ADDTS Response Frame)

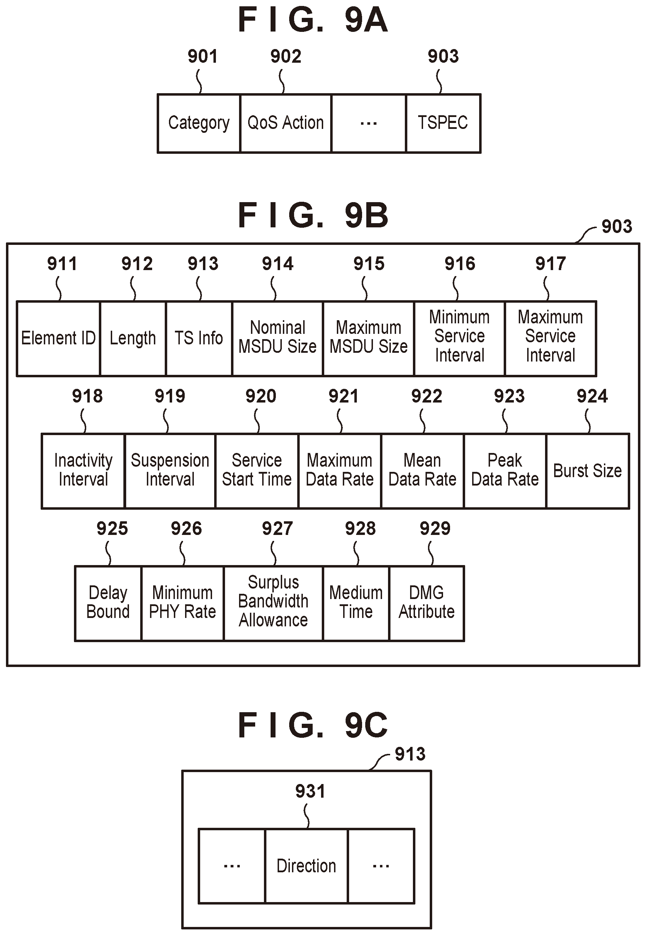

An example of the structure of the ADDTS Request frame will be described with reference to Figs. 9A to 9C. The ADDTS Request frame is one of Action frames, and includes a Category field 901 and a Qos Action field 902, similar to other Action frames defined in the IEEE 802.11 standard. The Qos Action field 902 stores a value indicating that this frame is an ADDTS Request frame. In addition, the ADDTS Request frame further includes at least a TSPEC field 903 formed from parameters that define the traffic flow characteristics and expected QoS.

In the TSPEC field 903, an Element ID field 911 stores a value for identifying the information element, and a Length field 912 stores a value indicating the data length of the information element. A TS info field 913 stores a value indicating a data direction and an access method. A Nominal MSDU Size field 914 stores a value indicating the size of an MSDU (MAC Service Data Unit), and a Maximum MSDU size field 915 stores a value indicating the maximum size of the MSDU. A Minimum Service interval field 916 stores a value indicating the minimum interval between Service periods. A Maximum Service interval field 917 stores a value indicating the maximum interval between Service periods. An Inactivity interval field 918 stores a value indicating that no MPDU is transmitted or received for a value multiplied by µs (microseconds). A Suspension Interval field 919 stores a value indicating that no MSDU is transmitted or received for a value multiplied by µs. A Service Start time field 920 stores a value indicating the start timing of a service. A Minimum Data Rate field 921, a Mean Data Rate field 922, and a Peak Data Rate field 923 store values indicating the minimum, average, and peak data rates, respectively. A Burst Size field 924 stores a value indicating a burst size, and a Delay Bound field 925 stores a delay limit value. A Minimum PHY Rate field 926 indicates the minimum communication rate in a physical layer (PHY). A Surplus Bandwidth Allowance field 927 stores a value for specifying an actual necessary bandwidth in consideration of retransmission and the like. A Medium Time field 928 stores a value indicating a time allowed until a transmission medium is accessed. A DMG Attributes field 929 stores information concerning Direct Multi Gigabit (DMG).

The TS info field 913 includes a Direction field 931 indicating a communication direction. The Direction field 931 is formed from 2 bits. When the first bit of this value is set to 0 and the next bit is set to 1, a Direct Link is indicated. Note that in this embodiment, when the Direction field 931 is set to 01, P2P communication is indicated. When the STA 102 transmits an ADDTS Request frame to the AP 101, information indicating execution of P2P communication can be included in the Direction field 931.

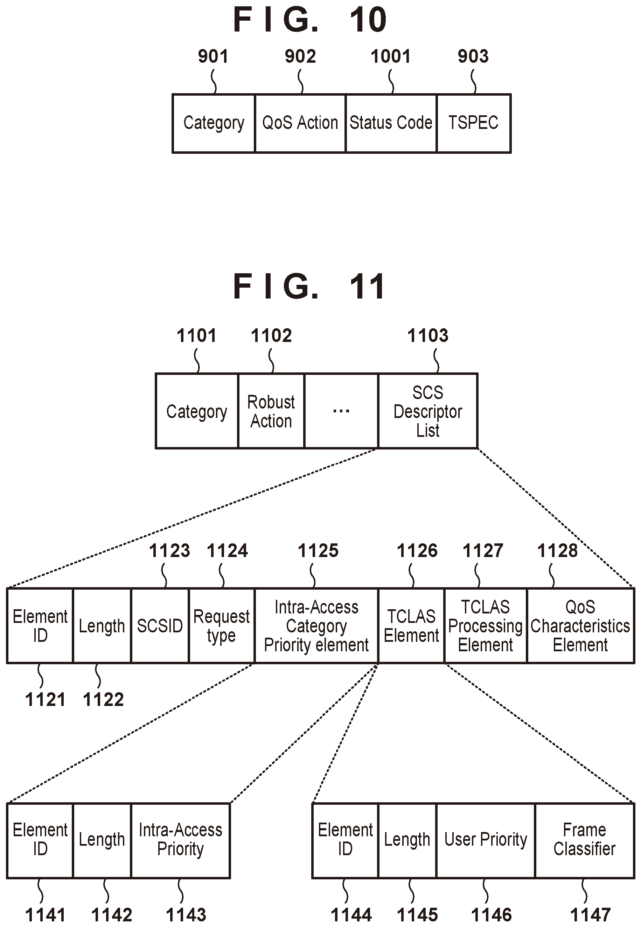

Fig. 10 shows an example of the structure of the ADDTS Response frame. The ADDTS Response frame has a structure obtained by inserting a Status code field 1001 between the Qos Action field 902 and the TSPEC field 903 in the structure of the ADDTS Request frame shown in Figs. 9A to 9C. The Status code field 1001 stores information indicating whether to accept a request indicated by the ADDTS Request frame. The Status code field 1001 is set to, for example, 0 in a case where the request is accepted and 1 in a case where the request is not accepted. Furthermore, each subfield of the TSPEC field 903 is set with the same value as that stored in the corresponding subfield of the ADDTS Request frame.

The STA can notify the AP of the request (schedule) of P2P communication using the above-described ADDTS Request frame. Then, based on the request, the AP can form a Beacon frame so as to indicate, as the channel and period recommended to be used for P2P communication, the channel used by the self-apparatus and an available time during which this channel is not used, and transmits the Beacon frame. This allows the STA to specify, for example, the channel and period that are not used for communication of the AP. Then, when the STA executes P2P communication in the channel for the period (in the recommended channel for the recommended period), it is possible to execute P2P communication without interfering with communication in the infrastructure mode executed by the AP.

### (Modification 1)

The above-described embodiment has explained an example in which the STA notifies, using the information of the TSPEC field in the ADDTS Request frame, the AP of information such as a time period in which P2P communication is scheduled to be executed. However, this is merely an example, and the STA may notify the AP of the information concerning P2P communication without using the ADDTS Request frame or the TSPEC field. For example, information of the SCS (Stream Classification Service) Discriptor List field of an SCS Request frame may be used to collect the information.

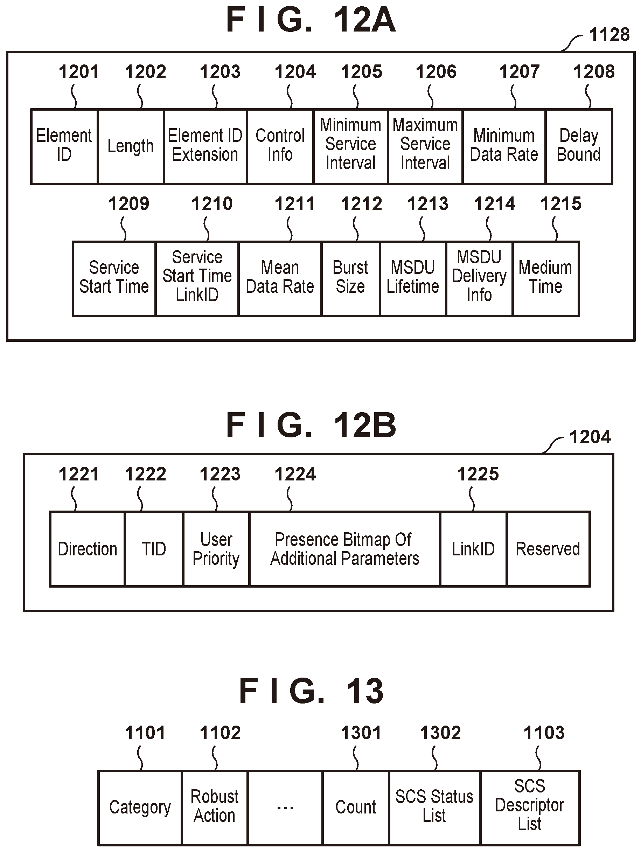

Figs. 11, 12A, and 12B show an example of the structure of the SCS Request frame. This frame includes at least a Category field 1101, a Robust Action field 1102, and an SCS Descriptor List field 1103. At this time, the SCS Descriptor List field 1103 is formed by an SCS Descriptor element described in the IEEE 802.11-2020 standard. The SCS Descriptor List field 1103 includes an SCSID field 1123 and a Request type field 1124 although a detailed description thereof will be omitted. Furthermore, the SCS Descriptor List field 1103 includes an intra-Access Category Priority Element field 1125. The SCS Descriptor List field 1103 further includes a TCLAS Element field 1126 and a TCLAS Processing Element field 1127. Note that TCLAS is Traffic class. The SCS Descriptor List field 1103 further includes a QoS Characteristics Element field 1128 storing information of the time period in which the STA is scheduled to use P2P communication.

Figs. 12A and 12B show the structure of the QoS Characteristics Element field 1128. The QoS Characteristics Element field 1128 includes an Element ID field 1201 for identifying the information element, and a Length field 1202 indicating the data length of the information element. The QoS Characteristics Element field 1128 includes a Control info field 1204 indicating a data direction and an access method. In addition, the QoS Characteristics Element field 1128 includes a Minimum Service interval field 1205 and a maximum Service interval field 1206. Note that the Minimum Service interval field 1205 indicates the minimum interval between Service periods. The maximum Service interval field 1206 indicates the maximum interval between Service periods. The QoS Characteristics Element field 1128 includes a Delay Bound field 1208, a Service Start time field 1209, and a Mean Data Rate field 1211.

The Control info field 1204 includes a Direction field 1221 indicating a communication direction. The Direction field 1221 is formed from 2 bits. When the first bit of this value is set to 0 and the next bit is set to 1, a Direct Link is indicated. In this embodiment, when the Direction field 1221 is set to 01, P2P communication is indicated. When the STA 102 transmits an SCS Request frame to the AP 101, information indicating execution of P2P communication can be included in the Direction field 1221.

Fig. 13 shows an example of the structure of an SCS Response frame returned from the AP to the STA in response to the SCS Request frame. The SCS Response frame has a structure obtained by adding a Count field 1301 and an SCS Status List field 1302 to the structure of the SCS Request frame shown in Figs. 12A and 12B. The SCS Status List field 1302 stores information indicating whether the contents requested in the SCS Request frame are accepted. In addition, the SCS Descriptor List field 1103 stores the same value as the information designated in the SCS Request frame.

As described above, the AP can collect the request (schedule) of P2P communication of the STA using a frame other than the ADDTS Request frame. Then, similar to the above-described embodiment, the AP can form a Beacon frame based on the collected information, and notify the STA of the information of the recommended channel and the recommended period concerning P2P communication.

### (Modification 2)

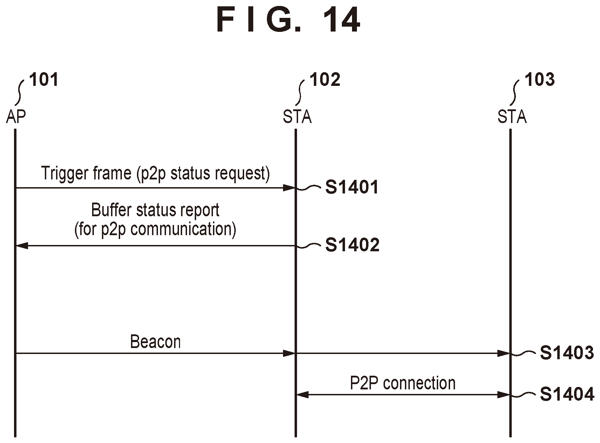

The above-described information of the request (schedule) of P2P communication may be collected by trigger-based communication. That is, the AP transmits a Trigger frame to the STA, and the STA can transmit, to the AP, a frame such as a Buffer status report frame including the information of the request (schedule) of P2P communication in response to the Trigger frame. Fig. 14 shows an example of the procedure of this processing. First, the AP 101 transmits a Trigger frame to query the STA 102 about P2P communication information (whether to execute P2P communication, a period during which P2P communication is scheduled to be executed, and the like) (S1401). In this Trigger frame, the value of a Trigger type in a Common Info field may be set to a dedicated value for collecting information concerning P2P communication. For example, the type of this frame can be represented by 4 bits. For example, the Trigger Type subfield value can be set to 9. In a case where P2P communication is used, the STA 102 can store, in the Buffer Status report frame, information indicating an amount of data to be transmitted by P2P communication among data accumulated in a buffer, and transmit the frame to the AP 101 (S1402). The AP 101 generates, based on the obtained data amount information, a Recomended element to indicate, for example, the recommended channel and the recommended period of P2P communication shown in Fig. 7 or 8. Then, the AP 101 generates a Beacon frame including the Recomended element, and broadcasts it (S1403). The STA 102 and STA 103 receive the Beacon frame, and execute P2P communication based on the Recomended element included in the frame (S1404).

As described above, the AP 101 can collect the request of P2P communication of the STA by trigger-based communication, form a Beacon frame based on the collected information, and notify the STA of the information of the recommended channel and the recommended period concerning P2P communication.

Note that the above-described embodiment has explained the configuration in which the AP 101 describes, in the MAC frame of the Beacon frame, the information of the recommended period and the recommended channel of P2P communication, and broadcasts it to the STA 102 and the STA 103, but the present invention is not limited to this. That is, the STA may be notified of the recommendation information concerning P2P communication using another frame. For example, if the AP 101 receives a search request (Probe Request frame) from the STA, the AP 101 may return a search response (Probe Response frame) including the above-described recommendation information. Furthermore, if the AP 101 receives a connection request (Association Request frame) from the STA, the AP 101 may return a connection response (Association Response frame) including the above-described recommendation information. If the AP 101 receives a reconnection request (Reassociation Request frame) from the STA, the AP 101 may return a reconnection response (Reassociation Response frame) including the above-described recommendation information. That is, the recommendation information concerning P2P communication may be unicast, instead of being broadcast. As described above, it is possible to collect information concerning the request of P2P communication in the STA using various frames, and notify the STA of recommendation information concerning P2P communication using various frames.

Note that the above embodiment has been explained in the context of the access point and stations complying with the IEEE 802.11 series standard, but the present invention is not limited to this. For example, an arbitrary communication apparatus complying with another communication standard such as the cellular communication standard may perform the above-described processing. To the extent permitted in a system, the processing that has been explained as processing executed by the above-described access point may be executed by the station, and the processing that has been explained as processing executed by the station may be executed by the access point.

The present invention can also be implemented by processing of supplying a program for implementing at least one function of the above-described embodiment to a system or apparatus via a network or a storage medium and reading out and executing the program by at least one processor in the computer of the system or apparatus. The present invention can also be implemented by a circuit (for example, ASIC) for implementing at least one function.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-210284 filed December 13, 2023, which is hereby incorporated by reference herein.

## Claims

1. A communication apparatus functioning as an access point complying with an IEEE 802.11 series standard, comprising:
reception means for receiving, from a first other communication apparatus connected to the communication apparatus, a first frame including first information concerning a period during which communication is scheduled to be executed between the first other communication apparatus and a second other communication apparatus without intervention of the communication apparatus; and
transmission means for transmitting, based on the first information, a second frame including second information capable of specifying a recommended period that is recommended to be used for communication between the first other communication apparatus and the second other communication apparatus without intervention of the communication apparatus.

2. The communication apparatus according to claim 1, wherein
the transmission means
decides, as a recommended channel, a channel in which the communication apparatus operates, and decides, as the recommended period, a period during which the communication apparatus does not use the recommended channel to execute communication, and
transmits the second frame including the second information capable of specifying a combination of the recommended channel and the recommended period in the recommended channel.

3. The communication apparatus according to claim 2, wherein
the transmission means
decides, as the recommended channel, each of at least one channel in which the communication apparatus operates, and decides, as the recommended period, a period during which the communication apparatus does not use each recommended channel to execute communication, and
transmits the second frame including the second information capable of specifying a combination of the channel and the recommended period with respect to each of the at least one channel.

4. The communication apparatus according to claim 3, wherein the second frame includes at least one field respectively corresponding to the at least one channel, and each of the at least one field indicates information representing the recommended period.

5. The communication apparatus according to claim 4, wherein in the second frame, with respect to, among the at least one channel, a channel in which the recommended period is not set, the field corresponding to the channel does not indicate the recommended period.

6. The communication apparatus according to claim 5, wherein in the second frame,
with respect to, among the at least one channel, a channel in which the recommended period is not set, the field corresponding to the channel indicates that the information of the recommended period is not included, and does not include the information representing the recommended period, and
with respect to, among the at least one channel, a channel in which the recommended period is not set, the field corresponding to the channel indicates that the information of the recommended period is included, and includes the information representing the recommended period.

7. The communication apparatus according to any one of claims 1 to 6, wherein
the first information includes information of a data amount communicated between the first other communication apparatus and the second other communication apparatus without intervention of the communication apparatus, and
the transmission means decides the recommended period based on the data amount.

8. The communication apparatus according to any one of claims 1 to 7, wherein
the first information further includes information concerning a data amount scheduled to be communicated between the first other communication apparatus and the second other communication apparatus without intervention of the communication apparatus, and
the transmission means decides the recommended period based on the information of the period.

9. A communication apparatus functioning as a station complying with an IEEE 802.11 series standard, comprising:
transmission means for transmitting, to a first other communication apparatus connected to the communication apparatus, a first frame including first information concerning a period during which communication is scheduled to be executed between the communication apparatus and a second other communication apparatus without intervention of the first other communication apparatus;
reception means for receiving, after the transmission of the first frame, from the first other communication apparatus, a second frame including second information capable of specifying a recommended period that is recommended to be used for communication between the communication apparatus and the second other communication apparatus without intervention of the first other communication apparatus; and
execution means for executing communication with the second other communication apparatus without intervention of the first other communication apparatus during the recommended period.

10. The communication apparatus according to claim 9, wherein
a channel in which the first other communication apparatus operates is decided as a recommended channel, and a period during which the first other communication apparatus does not use the recommended channel to execute communication is decided as the recommended period, and
the reception means receives the second frame including the second information capable of specifying a combination of the recommended channel and the recommended period in the recommended channel.

11. The communication apparatus according to claim 10, wherein
each of at least one channel in which the first other communication apparatus operates is decided as the recommended channel, and a period during which the first other communication apparatus does not use each recommended channel to execute communication is decided as the recommended period, and
the reception means receives the second frame including the second information capable of specifying a combination of the channel and the recommended period with respect to each of the at least one channel.

12. The communication apparatus according to claim 11, wherein the second frame includes at least one field respectively corresponding to the at least one channel, and each of the at least one field indicates information representing the recommended period.

13. The communication apparatus according to claim 12, wherein in the second frame, with respect to, among the at least one channel, a channel in which the recommended period is not set, the field corresponding to the channel does not indicate the recommended period.

14. The communication apparatus according to claim 13, wherein in the second frame,
with respect to, among the at least one channel, a channel in which the recommended period is not set, the field corresponding to the channel indicates that the information of the recommended period is not included, and does not include the information representing the recommended period, and
with respect to, among the at least one channel, a channel in which the recommended period is not set, the field corresponding to the channel indicates that the information of the recommended period is included, and includes the information representing the recommended period.

15. The communication apparatus according to any one of claims 9 to 14, wherein
the first information includes information of a data amount communicated between the communication apparatus and the second other communication apparatus without intervention of the first other communication apparatus, and
the recommended period is decided based on the data amount.

16. The communication apparatus according to any one of claims 9 to 15, wherein
the first information includes information concerning a data amount scheduled to be communicated between the communication apparatus and the second other communication apparatus without intervention of the first other communication apparatus, and
the recommended period is decided based on the information of the period.

17. The communication apparatus according to any one of claims 1 to 16, wherein the first frame is one of an ADDTS Request frame, an SCS Request frame, and a Buffer Status report frame.

18. The communication apparatus according to any one of claims 1 to 17, wherein the second frame is one of a Beacon frame, a Probe Response frame, an Association Response frame, and a Reassociation Response frame.

19. A communication method executed by a communication apparatus functioning as an access point complying with an IEEE 802.11 series standard, comprising:
receiving, from a first other communication apparatus connected to the communication apparatus, a first frame including first information concerning a period during which communication is scheduled to be executed between the first other communication apparatus and a second other communication apparatus without intervention of the communication apparatus; and
transmitting, based on the first information, a second frame including second information capable of specifying a recommended period that is recommended to be used for communication between the first other communication apparatus and the second other communication apparatus without intervention of the communication apparatus.

20. A communication method executed by a communication apparatus functioning as a station complying with an IEEE 802.11 series standard, comprising:
transmitting, to a first other communication apparatus connected to the communication apparatus, a first frame including first information concerning a period during which communication is scheduled to be executed between the communication apparatus and a second other communication apparatus without intervention of the first other communication apparatus;
receiving, after the transmission of the first frame, from the first other communication apparatus, a second frame including second information capable of specifying a recommended period that is recommended to be used for communication between the communication apparatus and the second other communication apparatus without intervention of the first other communication apparatus; and
executing communication with the second other communication apparatus without intervention of the first other communication apparatus during the recommended period.

21. A program for causing a computer, provided in a communication apparatus, to execute a communication method defined in claim 19 or 20.
